# EUROPÄISCHE PATENTSCHRIFT

(11) **EP 2 959 765 B1**
(45) Veröffentlichungstag und Bekanntmachung des Hinweises auf die Patenterteilung: **06.09.2017**
(21) Anmeldenummer: 15001680.6
(22) Anmeldetag: 05.06.2015
(51) Int. Cl.: A01D 41/14

(54) **SCHNEIDWERK MIT MITTELTEIL UND SEITLICH DAZU ANGEORDNETEN SEITENTEILEN**
CUTTING ASSEMBLY WITH CENTRE AND LATERALLY ARRANGED SIDE PARTS
BARRE DE COUPE DOTÉE D'UNE PARTIE MÉDIANE ET PARTIES LATÉRALES DISPOSÉES LATÉRALEMENT PAR RAPPORT À CELLE-CI

(30) Priorität: 25.06.2014 DE 102014009156
(43) Veröffentlichungstag der Anmeldung: 30.12.2015
(73) Patentinhaber: Carl Geringhoff GmbH & Co. KG, 59227 Ahlen (DE)
(72) Erfinder: Selting, Stephan Schulze, D-59320 Enniger (DE); Webermann, Dirk, D-48308 Senden (DE); Rückamp, Jan Bernd Schulze, D-59320 Ennigerloh-Enniger (DE); Sudhues, Steffen, D-59227 Ahlen (DE); Pokriefke, Michael, D-27798 Hude (DE)
(74) Vertreter: Weeg, Thomas

(56) Entgegenhaltungen:
- WO-A2-2007/095430
- DE-A1-102011 081 400

## Beschreibung

Die vorliegende Erfindung bezieht sich auf ein Schneidwerk zum Anbau an einen Mähdrescher mit einem an einen Einzugskanal eines Mähdreschers anbaubaren Mittelteil und seitlich dazu angeordneten Seitenteilen, wobei die Seitenteile um eine zumindest annähernd in Fahrtrichtung weisende Schwenkachse verschwenkbar sind, einem Messerbalken, der von mehreren schwenkbeweglich mit einem Rahmen des Mittelteils oder eines Seitenteils verbundenen Armen gehalten ist, Fördervorrichtungen zum Abfördern des geschnittenen Halmguts und Antriebsvorrichtungen zum Antrieb des Messerbalkens und der Fördervorrichtungen.

Aus der Schrift DE 10 2011 081 400 A1 ist ein gattungsgemäßes Schneidwerk bekannt. An den Seitenteilen befinden sich außer den starren Messerhaltern an den Außenseiten jeweils acht schwenkbewegliche Arme, die den Messerbalken halten, und am Mittelteil sind sechs schwenkbewegliche Arme angebracht, die den Messerbalken halten. Über die Breite des dreiteiligen Schneidwerks verteilt finden sich somit bei einer vorgegebenen Arbeitsbreite zweiundzwanzig schwenkbewegliche Haltearme, von denen der Messerbalken gehalten ist. Die Haltearme haben einen gleichmäßigen seitlichen Abstand von etwa 76 cm zueinander. Das Schneidwerk kann sich auf diese Weise leicht an eine unterschiedliche Bodenkontur in Querrichtung anpassen, was insbesondere bei größeren Arbeitsbreiten von mehr als 8 m und Erntegut, das möglichst bodennah geschnitten werden muss, wie beispielsweise Soja, von Vorteil ist.

Es ist die Aufgabe der vorliegenden Erfindung, das bekannte Schneidwerk zu verbessern.

Die Aufgabe wird für ein gattungsgemäßes Schneidwerk durch die kennzeichnenden Merkmale des Anspruchs 1 gelöst.

Durch die Verringerung der Anzahl der Arme sinkt das Gewicht des Schneidwerks insgesamt, auch dessen Herstellungskosten können verringert werden. Bei einem Schneidwerk mit 10 m Arbeitsbreite können beispielsweise bei einem seitlichen Abstand der schwenkbeweglichen Arme von 1 m zueinander und zwei feststehenden Armen an den Außenseiten nur neun solcher Arme ausreichen, um mit dem Messerbalken die Kontur des Boden eines abzuerntenden Feldes zu kopieren, während bei der Vorrichtung nach dem Stand der Technik zwölf solcher Arme erforderlich wären. Bei einem Abstand der schwenkbeweglichen Arme zueinander von 1,50 m würden sechs schwenkbewegliche Arme anstelle von zwölf ausreichen, was einer Halbierung der Armzahl entspricht. Durch die verringerte Anzahl von schwenkbeweglichen Armen wird das Schneidwerk bei gleicher Arbeitsbreite insbesondere auch in den Seitenteilen erheblich leichter, wodurch sich auch der Aufwand für die Aufnahme der Tragkräfte der Seitenteile im Mittelteil des Schneidwerks sowie an den Halterungen zum und am Schrägförderer der Erntemaschine verringert. Überraschenderweise verschlechtert sich die Bodenanpassung des Messerbalkens an die Bodenkontur kaum, da der theoretisch mögliche Verschwenkweg der schwenkbeweglichen Arme bei der aus dem Stand der Technik bekannten Anordnung durch die eingeschränkte Flexibilität des Messerbalkens begrenzt ist. Das Verdienst der vorliegenden Erfindung ist in der Erkenntnis zu sehen, dass die begrenzte Flexibilität des Messerbalkens auch mit nur wenigen schwenkbeweglichen Armen nahezu vollständig ausgenutzt werden kann. Der Abstand der schwenkbeweglichen Arme muss dabei im Bereich des Mittelteils und der Seitenteile des Schneidwerks nicht überall gleich sein. Insbesondere der Abstand der schwenkbeweglichen Arme, die jeweils am Mittelteil und an den Seitenteilen angelenkt sind, kann voneinander variieren. Auch können sich unterschiedliche Abstände ergeben zwischen benachbarten schwenkbeweglichen Armen, die im Anstoßbereich des Mittelteils an die jeweiligen Seitenteile oder im Anstoßbereich eines inneren Seitenteils an ein äußeres Seitenteil angeordnet sind.

Der Messerbalken weist über seine Arbeitsbreite hinweg eine unterschiedliche Steifigkeit auf. Durch die unterschiedliche Steifigkeit können sich einzelne, weicher ausgestaltete Abschnitte des Messerbalkens stärker verformen als andere, steifer ausgestaltete Abschnitte. Dadurch ist es möglich, die Bodenanpassungsfähigkeit des Messerbalkens trotz der verringerten Anzahl der schwenkbeweglichen Arme auf einem zum Stand der Technik vergleichbaren Niveau zu halten, indem durch die unterschiedliche Steifigkeit des Messerbalkens über seine Arbeitsbreite hinweg Höhenunterschiede zumindest teilweise auch über den Messerbalken selbst ohne eine entsprechende Höhenverschwenkung der schwenkbeweglichen Arme ausgeglichen werden. Zudem ermöglichen es die weniger steifen Bereiche des Messerbalkens den schwenkbeweglichen Armen, sich leichter über ihren theoretisch möglichen Verschwenkweg hinweg zu bewegen. So können einzelne schwenkbewegliche Arme größere Schwenkwege machen, ohne dabei benachbarte schwenkbewegliche Arme zumindest teilweise mitzunehmen, oder die Mitnahmebewegung ist erheblich kürzer als bei einem gleichmäßig steif ausgeführten Messerbalken, weil ein Teil der Mitnahmebewegung durch die flexibleren Abschnitte des Messerbalkens ausgeglichen wird.

Ein Messerbalkenabschnitt ist zwischen zwei benachbarten schwenkbeweglichen Armen in seinem mittleren Bereich steifer ausgebildet als in seinen seitlichen Bereichen. Durch die steifere Ausbildung des mittleren Bereiches hängt dieser Bereich weniger stark nach unten durch als bei einer weniger steifen Ausbildung. Dadurch ist das Schnittbild der Stoppeln auf dem Feld weniger wellenförmig ausgebildet als das Fall wäre ohne eine Versteifung. Die in den seitlichen Bereichen geringere Biegesteifigkeit erlaubt hingegen eine stärkere Verbiegebewegung dieses Messerbalkenabschnitts insgesamt, wodurch die Anpassungsbewegungen des Messerbalkens an eine sich verändernde Bodenkontur bei der Vorfahrt der Erntemaschine in den Erntegutbestand erleichtert werden.

Nach einer Ausgestaltung der Erfindung weist die Halteleiste des Messerbalkens in einem steiferen Abschnitt im Verhältnis zu einem weniger steifen Abschnitt eine materialmäßige Verdickung auf. Die materialmäßige Verdickung kann beispielsweise in Gestalt einer abschnittsweise dicker ausgeführten einteiligen Halteleiste selbst ausgeführt sein, oder die Halteleiste selbst ist über ihre Länge gleichmäßig dick, und nur in den steiferen Abschnitten sind zusätzliche Versteifungsleisten mit der Halteleiste verbunden. Neben der Länge der Halteleiste in Richtung der Arbeitsbreite des Schneidwerks gesehen kann die Halteleiste auch in ihrer Höhe und/oder Tiefe über die Länge hinweg variiert sein, um dadurch das Biegeverhalten im erfinderischen Sinne gezielt zu beeinflussen.

Nach einer Ausgestaltung der Erfindung ist in einem Abschnitt des Messerbalkens zwischen zwei benachbarten schwenkbeweglichen Armen der mittlere Teil dieses Abschnitts über eine Länge von fünf bis zu acht Zehnteln der Breite dieses Abschnitts versteift. Mit dem Längenmaß ist hier ebenfalls die Länge in Richtung der Arbeitsbreite gemeint. Demgemäß können die äußeren Ränder dieses Abschnitts in einer Länge von jeweils mindestens einem Zehntel der Breite dieses Abschnitts unversteift sein. Als Untergrenze ist der mittlere Abschnitt um zumindest fünf Zehntel der Breite dieses Abschnitts versteift, wobei dann die seitlichen Abschnitte jeweils zu 2,5 Zehnteln unversteift sind. Die Versteifung kann dabei über ihre Länge unterschiedlich stark ausgeprägt sein, und im mittleren Bereich kann die Versteifung abschnittweise ein- oder mehrfach unterbrochen sein, wobei dabei aber der versteifte Anteil insgesamt noch einen Längenanteil von fünf bis acht Zehnteln der Länge des Abschnitts des Messerbalkens zwischen zwei benachbarten schwenkbeweglichen Armen betragen sollte.

Nach einer Ausgestaltung der Erfindung sind an den Seitenteilen weniger als fünf, bevorzugt drei schwenkbewegliche Arme, und am Mittelteil weniger als vier, bevorzugt zwei schwenkbewegliche Arme, befestigt.

Nach einer Ausgestaltung der Erfindung sind die beiden zu einer Schwenkachse eines Seitenteils zu einem anderen Seitenteil oder dem Mittelteil benachbarten Arme in seitlicher Richtung versetzt zur Schwenkachse am Mittelteil und dem Seitenteil angeordnet. Durch den seitlichen Versatz der schwenkbeweglichen Arme zur Schwenkachse der Seitenteile werden bei einer Schwenkbewegung eines Seitenteils mit seinem vom Mittelteil abgewandten Ende um die Schwenkachse nach oben oder unten beide zur Schwenkachse benachbarten schwenkbeweglichen Arme zu einer entsprechenden Bewegung nach oben oder unten mitgenommen. Durch die Auf- oder Abbewegung von zwei der Schwenkachse benachbarten schwenkbeweglichen Armen wird der Knickwinkel, dem der Messerbalken sonst im Bereich der Schwenkachse ausgesetzt wäre, zwischen den beiden Befestigungspunkten des Messerbalkens an den zur Schwenkachse benachbarten schwenkbeweglichen Armen aufgeteilt. Die aufgeteilten und dadurch an den Angriffspunkten verringerten zumindest zwei Knickwinkel belasten den Messerbalken erheblich weniger als eine stärkere Biegung des Messerbalkens im Bereich der Schwenkachse. Wenn der Schwenkwinkel im Bereich der Schwenkachse beispielsweise 10° beträgt, resultiert aus der Aufteilung dieses Schwenkwinkels auf die Angriffspunkte von zwei schwenkbeweglichen Armen ein verbleibender Knickwinkel von jeweils nur 5°, den das Material des Messerbalkens schadlos auch während des laufenden Betriebs abbilden kann.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher erläutert werden. Es zeigen:
- Fig. 1:: eine Ansicht von oben auf einen Rahmen eines Schneidwerks mit angebautem Messerbalken, und
- Fig. 2:: eine Schrägansicht von vorne auf ein Schneidwerk, und
- Fig. 3:: eine ausschnittweise Vergrößerung des in Fig. 2 kenntlich gemachten Bereichs in einer Stirnansicht.

In der beigefügten Zeichnung ist der Grundaufbau eines Schneidwerks 2 dargestellt. Das Schneidwerk 2 weist ein Mittelteil 4 und zwei sich seitlich daran anschließende Seitenteile 6 auf. Über das Mittelteil 4 kann das Schneidwerk 2 mit einer Erntemaschine wie beispielsweise dem Einzugskanal eines zeichnerisch nicht näher dargestellten Mähdreschers verbunden werden. Das Mittelteil 4 und die Seitenteile 6 verfügen jeweils über einen Rahmen, wobei die Rahmen der Seitenteile 6 um jeweils eine Schwenkachse 8 schwenkbar mit dem Mittelteil 4 verbunden sind. Die Schwenkachse 8 kann genau in die Vorfahrtrichtung des Schneidwerks 2 weisen, sie kann aber auch von der Vorfahrtrichtung um einige Winkelgrade abweichen. Die Schwenkachse 8 kann genau waagerecht ausgerichtet sein, sie kann gegenüber der Waagerechten aber auch um einige Grade abweichen.

Aus Vereinfachungsgründen sind die Fördervorrichtungen, die das Schneidwerk 2 im vollständig montierten Zustand aufweist, nicht dargestellt. Dabei kann es sich beispielsweise um mehrere Tuchförderer handeln, von denen zwei im Bereich der Seitenteile 6 angeordnet sind und das geschnittene Halmgut aufeinander zu bewegen, so dass es im mittleren Bereich des Schneidwerks 2 auf einem dort angeordneten weiteren Tuchförderer zusammen geführt wird. Im mittleren Bereich des Schneidwerks 2 im Bereich des Mittelteils 4 fördert der Tuchförderer das von ihm angenommene Halmgut nach hinten in Richtung des Einzugskanals des Mähdreschers ab.

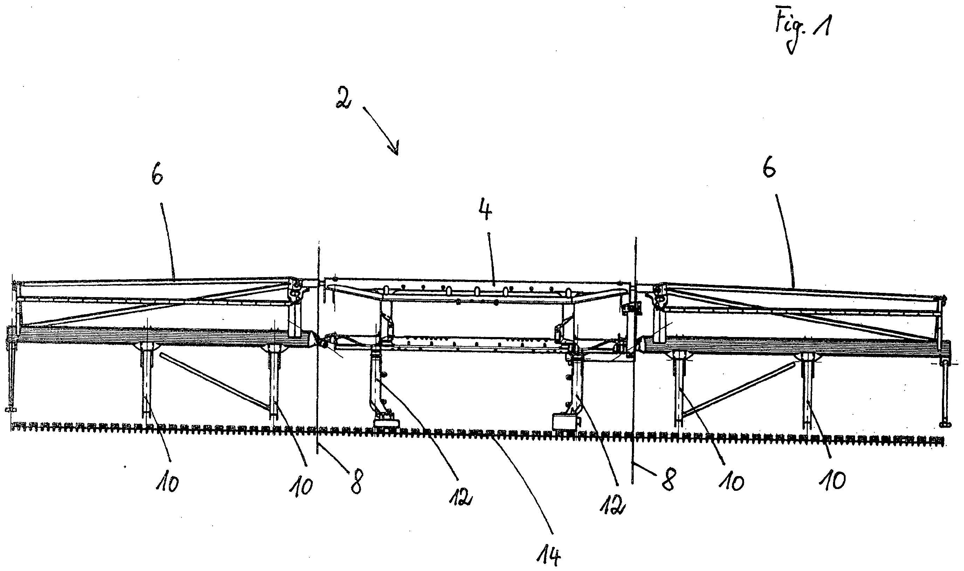

Aus der in der beigefügten Figur 1 gezeigten Ansicht von oben auf das Schneidwerk 2 sind die schwenkbeweglichen Arme 10 erkennbar, die im Bereich der Seitenteile 6, sowie die schwenkbeweglichen Arme 12, die im Bereich des Mittelteils 4 angeordnet sind. Die schwenkbeweglichen Arme 10, 12 sind jeweils über eine feste Schwenkachse mit ihrem dem Seitenteil 6 bzw. dem Mittelteil 4 zugewandten Ende mit diesem verbunden, während ihr gegenüberliegendes verschwenkbares Ende mit dem Messerbalken 14 verbunden ist. Über eine Auf- oder Abverschwenkbewegung der Arme 10, 12 kann sich der Messerbalken 14 der jeweiligen Bodenkontur anpassen.

In dem Ausführungsbeispiel gemäß der beigefügten Figur ist das Schneidwerk 2 aus drei Rahmenteilen 4, 6 zusammengesetzt und weist sechs schwenkbeweglichen Arme 10, 12 auf, die zusammen mit den starren Messerhaltern an den Außenseiten des Schneidwerks den Messerbalkens 14 mit sieben Teilabschnitten halten. Die Teilabschnitte des Messerbalkens 14 sind zwischen den schwenkbeweglichen Armen 10, 12 weitgehend biegesteif. Bei Verschwenkbewegungen einzelner oder mehrerer schwenkbeweglicher Arme 10, 12 stellen sich Biegeradien insbesondere im Bereich der Arme 10, 12 ein.

Zur Schwenkachse 8 benachbarte schwenkbewegliche Arme 10, 12 sind zur Schwenkachse 8 mit einem deutlichen seitlichen Abstand angeordnet. Bei einer Schwenkbewegung eines Seitenteils 6 relativ zum Mittelteil 4 ergeben sich dadurch Schwenkbewegungen beider benachbarter schwenkbeweglicher Arme 10, 12, die den Messerbalken 14 dadurch über eine größere Breite als den unmittelbaren Bereich, in dem der Knickwinkel aus der Schwenkbewegung des Seitenteils 6 um die Schwenkachse 8 sonst auf den Messerbalken 14 wirken würde, mit geringeren Biegeradien bewegen und biegen.

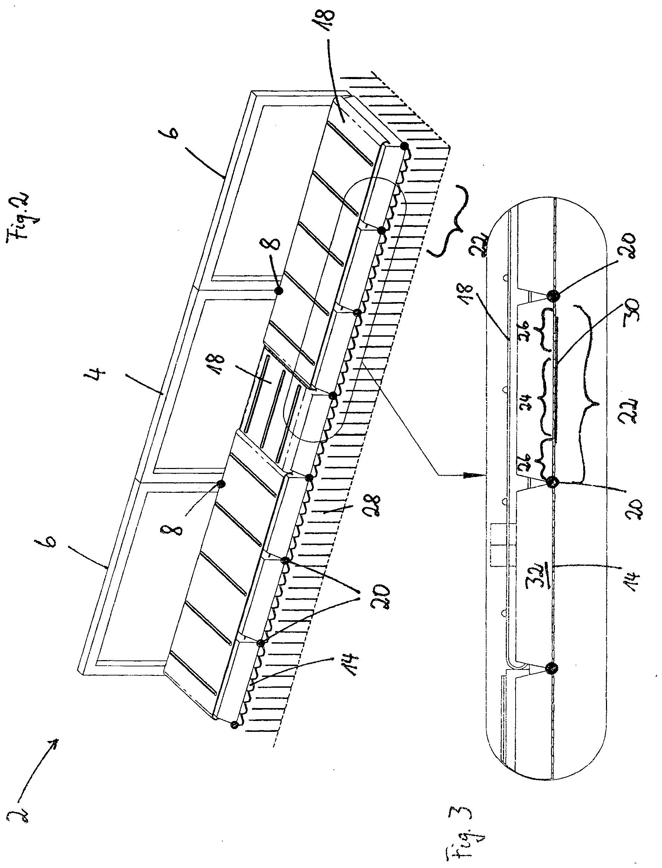

In Fig. 2 ist eine Schrägansicht von vorne auf ein Schneidwerk 2 gezeigt. Auch hier ist das Schneidwerk 2 dreiteilig ausgebildet mit einem Mittelteil 4 und zwei sich daran seitlich anschließenden Seitenteilen 6. Die Schwenkachsen 8 sind durch schwarze Punkte angedeutet. Das geschnittene Erntegut wird mit den Tuchförderern der Fördervorrichtungen 18 nach dem Schnitt zum Einzugskanal einer zeichnerisch nicht dargestellten Erntemaschine abgefördert. Der Messerbalken 14 ist an acht mit schwarzen Punkten dargestellten Haltepunkten 20 mit dem Schneidwerk 2 verbunden. Die Haltepunkte 20 sind die Enden von in dieser Ansicht nicht erkennbaren schwenkbeweglichen Armen 10.

Zwischen zwei benachbarten Haltepunkten 20 befindet sich ein Messerbalkenabschnitt 22, der in Fig. 3 in einer vergrößerten Ansicht des in Fig. 2 kenntlich gemachten Bereichs in einer Stirnansicht dargestellt ist. Im Ausführungsbeispiel sind insgesamt sieben Messerbalkenabschnitte 22 ausgebildet. Der Messerbalken 14 im Messerbalkenabschnitt 22 verfügt über einen mittleren Bereich 24 und über zwei sich daran seitlich anschließende seitlichen Bereiche 26. Während der mittlere Bereich 24 versteift ist, können die beiden seitlichen Bereiche 26 weniger steif als der mittlere Bereich 24 ausgebildet sein. Vor dem Schneidwerk 2 sind die zu erntenden Stängel 28 des Ernteguts in einer Reihe dargestellt. In Fig. 3 ist beispielhaft in einem Messerbalkenabschnitt 22 eine Versteifungsleiste 30 angedeutet, durch die der Messerbalken 14 in dem Messerbalkenabschnitt 22 im mittleren Bereich 24 versteift ist. Die Versteifung eines Messerbalkenabschnitts 22 ist auch mittels des Übergabeblechs 32 möglich, indem der mittlere Bereich 24 des Messerbalkenabschnitts 22 fest mit dem Übergabeblech 32 verbunden ist, die seitlichen Bereiche 26 jedoch nicht.

Wenn das in Fig. 3 gezeigte Schneidwerk 2 einen über die übrige Umgebung hervorstehenden Buckel überfährt, wandert der Haltepunkt 20 der Höhe des Buckels folgend nach oben und später wieder in die Ausgangslage zurück, um dadurch über den Buckel hinweg zu gleiten. Dabei wird auch der Haltepunkt 20 durch die Bewegung des schwenkbeweglichen Arms 10, 12 veranlasst, sich zunächst nach oben hin zu bewegen und danach wieder abzusinken. Der ansonsten waagerecht liegende Messerbalkenabschnitt 22 wird bei dieser Bewegung an seinem einen Ende von dem nach oben wandernden Haltepunkt 20 mit nach oben genommen, so dass sich bei diesem dadurch eine schräge räumliche Lage einstellt, mit der auch dieser über den Buckel ohne Anstoß hinweg bewegt wird. Auf der Rückseite des Buckels kann sich der schwenkbewegliche Arm 10, 12 mit dem Haltepunkt 20 wieder nach unten bewegen, und auch der Messerbalkenabschnitt 22 bewegt sich dabei wieder in seine annähernd horizontale Lage zurück. Die Flexibilität des Messerbalkenabschnitts 22 ist dabei insgesamt durch die weniger steif ausgebildeten seitlichen Bereiche 26 eines Messerbalkenabschnitts 22 im Verhältnis zu dem steifer ausgeführten mittleren Bereich 24 erhöht.

Das vorstehend beschriebene Ausführungsbeispiel dient nur der Erläuterung der Erfindung. Die Erfindung ist nicht auf das Ausführungsbeispiel beschränkt. Dem Fachmann bereitet es keine Schwierigkeiten, das Ausführungsbeispiel auf eine ihm als geeignet erscheinende Weise abzuändern, um es an einen konkreten Anwendungsfall anzupassen.

## Patentansprüche

1. Schneidwerk (2) zum Anbau an einen Mähdrescher mit einem an einen Einzugskanal eines Mähdreschers anbaubaren Mittelteil (4) und seitlich dazu angeordneten Seitenteilen (6), wobei die Seitenteile (6) um eine zumindest annähernd in Fahrtrichtung weisende Schwenkachse (8) verschwenkbar sind, einem Messerbalken (14), der von mehreren schwenkbeweglich mit einem Rahmen des Mittelteils (4) oder eines Seitenteils (6) verbundenen Armen (10, 12) gehalten ist, Fördervorrichtungen zum Abfördern des geschnittenen Halmguts und Antriebsvorrichtungen zum Antrieb des Messerbalkens (14) und der Fördervorrichtungen, **dadurch gekennzeichnet, dass** pro Meter Arbeitsbreite des Schneidwerks (2) im Durchschnitt der Gesamtarbeitsbreite weniger als ein schwenkbeweglicher Arm (10, 12) vorhanden ist, der Messerbalken (14) über seine Arbeitsbreite hinweg eine unterschiedliche Steifigkeit aufweist, und ein Messerbalkenabschnitt (22) zwischen zwei benachbarten schwenkbeweglichen Armen (10, 12) in seinem mittleren Bereich (24) steifer ausgebildet ist als in seinen seitlichen Bereichen (26).

2. Schneidwerk (2) nach Anspruch1, **dadurch gekennzeichnet, dass** die Halteleiste des Messerbalkens (14) in einem steiferen Abschnitt im Verhältnis zu einem weniger steifen Abschnitt eine materialmäßige Verdickung aufweist.

3. Schneidwerk (2) nach Anspruch 1 oder 2, **dadurch gekennzeichnet, dass** in einem Abschnitt des Messerbalkens (14) zwischen zwei benachbarten schwenkbeweglichen Armen (10, 12) der mittlere Teil dieses Abschnitts über eine Länge von fünf bis zu acht Zehnteln der Breite dieses Abschnitts versteift ist.

4. Schneidwerk (2) nach einem der vorhergehenden Ansprüche, **dadurch gekennzeichnet, dass** an den Seitenteilen (6) weniger als fünf, bevorzugt drei schwenkbewegliche Arme (10), und am Mittelteil (4) weniger als vier, bevorzugt zwei schwenkbewegliche Arme (12) befestigt sind.

5. Schneidwerk (2) nach einem der vorhergehenden Ansprüche, **dadurch gekennzeichnet, dass** die beiden zu einer Schwenkachse (8) eines Seitenteils (6) zu einem anderen Seitenteil (6) oder dem Mittelteil (4) benachbarten Arme (10, 12) in seitlicher Richtung versetzt zur Schwenkachse (8) am Mittelteil (4) und dem Seitenteil (6) angeordnet sind.

## Claims

1. Draper platform (2) for attachment to a combine harvester, the draper platform comprising a central section (4), which can be attached to a feed channel of a combine harvester, and lateral sections (6) arranged laterally with respect to said central section, the lateral sections (6) being pivotable about a pivot axis (8) that is oriented at least approximately in the direction of travel, a cutter bar (14) which is held by a plurality of pivotable arms (10, 12) connected to a frame of the central section (4) or of a lateral section (6), conveying devices for conveying away the cut stalk material, and drive devices for driving the cutter bar (14) and the conveying devices, **characterised in that**, per metre of working width of the draper platform (2), fewer than one pivotable arm (10, 12) is present with respect to the average of the entire working width, the cutter bar (14) has a different stiffness over its working width, and a cutter bar portion (22) between two adjacent pivotable arms (10, 12) is stiffer in its central region (24) than in the lateral regions (26) of said cutter bar portion.

2. Draper platform (2) according to claim 1, **characterised in that**, in a portion that is stiffer in relation to a less stiff portion, the retaining rail of the cutter bar (14) has a material thickening.

3. Draper platform (2) according to either claim 1 or claim 2, **characterised in that**, in a portion of the cutter bar (14) between two adjacent pivotable arms (10, 12), the central section of this portion is reinforced over a length of from five to eight tenths of the width of this portion.

4. Draper platform (2) according to any of the preceding claims, **characterised in that** fewer than five, preferably three, pivotable arms (10) are fastened to the lateral sections (6) and fewer than four, preferably two, pivotable arms (12) are fastened to the central section (4).

5. Draper platform (2) according to any of the preceding claims, **characterised in that** the two arms (10, 12) that are adjacent to a pivot axis (8) of a lateral section (6) adjoining a different lateral section (6) or adjoining the central section (4) are arranged on the central section (4) and the lateral section (6) so as to be offset from the pivot axis (8) in the lateral direction.

## Revendications

1. Unité de coupe (2) destinée à être fixée sur une moissonneuse-batteuse, l'unité de coupe comprenant une partie médiane (4) pouvant être montée sur un conduit d'insertion d'une moissonneuse-batteuse et des parties latérales (6) disposées latéralement à la partie médiane, les parties latérales (6) pouvant pivoter sur un axe de pivotement (8) dirigé au moins approximativement dans la direction de roulement, une barre de couteaux (14) supportée par une pluralité de bras (10, 12) reliée de façon pivotante à un cadre de la partie médiane (4) ou d'une partie latérale (6), des dispositifs de transport destinés à transporter la paille coupée et des dispositifs d'entraînement destinés à entraîner la barre de couteaux (14) et les dispositifs de transport, **caractérisée en ce que**, par mètre de largeur de travail de l'unité de coupe (2), la largeur de travail totale est en moyenne inférieure à un bras pivotant (10, 12), la barre de couteaux (14) présente différentes rigidités sur sa largeur de travail, et une portion (22) de barre de couteaux située entre deux bras pivotants adjacents (10, 12) est plus rigide dans sa région médiane (24) que dans ses régions latérales (26).

2. Unité de coupe (2) selon la revendication 1, **caractérisée en ce que** la baguette de retenue de la barre de couteaux (14) présente un épaississement de matière dans une portion plus rigide par rapport à une portion moins rigide.

3. Unité de coupe (2) selon la revendication 1 ou 2, **caractérisée en ce que**, dans une portion de la barre de couteaux (14) située entre deux bras pivotants adjacents (10, 12), la partie médiane de cette portion est rigidifiée sur une longueur de cinq à huit dixièmes de la largeur de cette portion.

4. Unité de coupe (2) selon l'une des revendications précédentes, **caractérisée en ce que** moins de cinq bras pivotants (10), de préférence trois, sont fixés aux parties latérales (6) et moins de quatre bras pivotants (12), de préférence deux, sont fixés à la partie médiane (4).

5. Unité de coupe (2) selon l'une des revendications précédentes, **caractérisée en ce que** les deux bras (10, 12), adjacents à un axe (8) de pivotement d'une partie latérale (6) par rapport à une autre partie latérale (6) ou à la partie médiane (4), sont disposés sur la partie médiane (4) et la partie latérale (6) en étant décalés latéralement par rapport à l'axe de pivotement (8).
